# EUROPEAN PATENT APPLICATION

(11) **EP 2 082 648 A1**
(43) Date of publication of application: **29.07.2009**
(21) Application number: 08100955.7
(22) Date of filing: 25.01.2008
(51) Int. Cl.: A22C 25/08

(54) **A fish processing apparatus and method for processing fish**

(71) Applicant: Cavanagh, Michael, Co. Donegal (IE)
(72) Inventor: Cavanagh, Michael, Co. Donegal (IE)
(74) Representative: Moore, Barry

(57) **Abstract**

The invention provides a fish processing apparatus (100) that may be used between a fishing vessel (110) and a fish factory (120). The apparatus is configured to receive fish from the fishing vessel and provides a pre-processing of the fish into a macerated form which may be then subsequently discharged into the factory.

## Description

### Field of the Invention

The invention relates to a fish processing apparatus and in particular to a stand alone apparatus configured to be used between a fishing vessel and a fish processing factory so as to achieve a pre-processing of the fish prior to discharge into the factory for their ultimate processing. The invention also relates to a method of pre-processing fish.

### Background

Fish processing is well known and relates to conversion of a caught fish species into an ultimate product- be that for human or other consumption. The nature of the processing undertaken will very much depend on the nature of the fish species and the intended final product. Traditionally fish processing was only effected in a fish factory, located close to the quay side where two or more fishing vessels could berth and discharge their catch. The fishing vessels would return to the quay after a successful fishing expedition with the fish in the condition that they were caught, albeit chilled from their storage in the hold of the vessel. The fish would then be discharged from the vessel to the fish factory where the whole fish would be processed to form the final product. This type of arrangement is still very common. Where the fish are pelagic fish they are commonly discharged from the hold of the fishing vessel under vacuum, whereby fish and water are sucked from the hold and then discharged to the quayside. Such arrangements are well known and have worked for many years.

With the development of larger fishing vessels, the distances that the vessels would travel on each excursion increased. It is also known in such circumstances to include on one or more of the vessels an element of fish processing on board- such fishing vessels have become known as fish factory ships. These factory ships are specifically designed for this purpose and the processing is a permanent element, integrally provided as part of the design of the ship.

With the development of fishing quotas the nature of the species that may be caught by a fishing vessel is highly controlled. As a result of this it has been necessary for fishing vessels to consider other species which traditionally have not found favour in the marketplace. Many of these new species are not useful for human consumption- the ratio of extractable meat to the skeleton of the fish being too low. Such species can however be used in fish meal for animal feed. However it has been found that the traditional method of processing fish cannot always be used for these new species. For example boar fish (Capros aper), while having been caught as a by catch for many years, have never been considered useful as a primary catch. One of the reasons for this is that due to the spiky nature of the fish it is difficult to transfer the fish from the hold of the vessel to the fish factory, the fish have a tendency to clog the piping of the hydraulic feed lines between the vessel and the factory. It will be appreciated that the inability to effectively and efficiently transfer a catch prejudices the commercial justification of the catch.

For these reasons and others there is a need to provide new method of fish processing.

### Summary

These and other problems are addressed by a fish processing apparatus provided in accordance with the teaching of the invention. Such an apparatus is configured to be provided as a stand-alone, typically portable, arrangement that can be used in-line between a fishing vessel and the fish factory. A processing apparatus provided in accordance with the teaching of the invention provides for an initial pre-processing of the fish subsequent to their discharge from the hold of the fishing vessel and prior to their ultimate processing in the fish factory.

Desirably the fish processing apparatus provides for a macerating of the whole fish received from the hold of the vessel through a shredding or blending arrangement to form a pulp which can then be transferred to the fish factory. By effecting the conversion of the whole fish to a pulp it is possible to then easily transfer the fish in this pulp form into the fish factory where ultimate processing into for example a fish meal may be effected. The provision of the fish in the pulp form minimises any clogging of the pipework leading into the fish factory.

Accordingly the invention provides a fish processing apparatus according to claim 1. Advantageous embodiments are provided in the dependent claims. The invention also provides a method of pre-processing fish prior to their discharge to a fish factory.

These and other features of the present invention will be better understood with reference to the drawings which follow.

### Brief Description of the Drawings

Figure 1 shows in schematic form installation of a fish processing apparatus in accordance with the teaching of the invention.
Figure 2 shows internal portions of the fish processing arrangement of Figure 1.

### Detailed Description of the Drawings

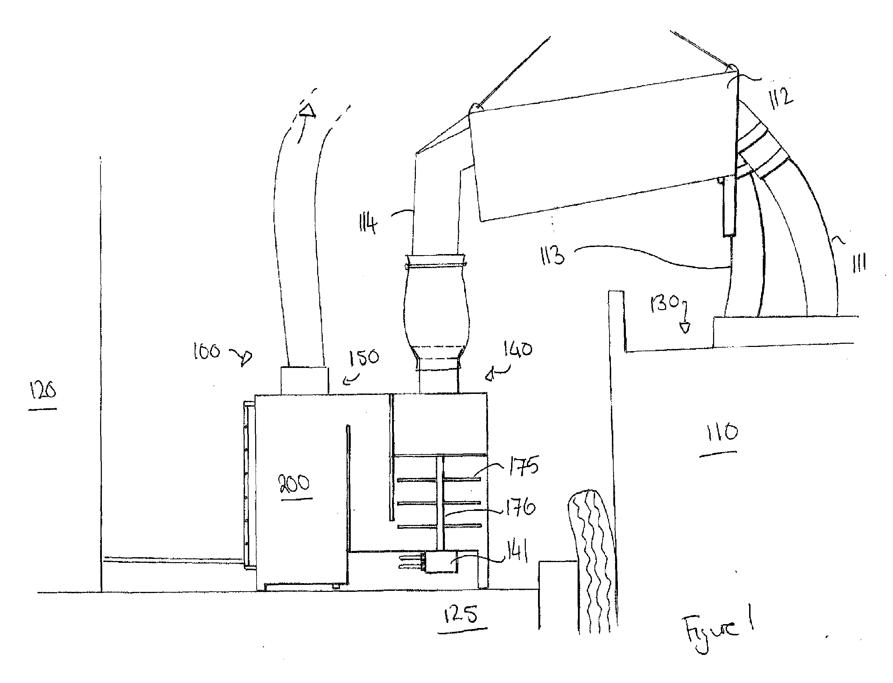

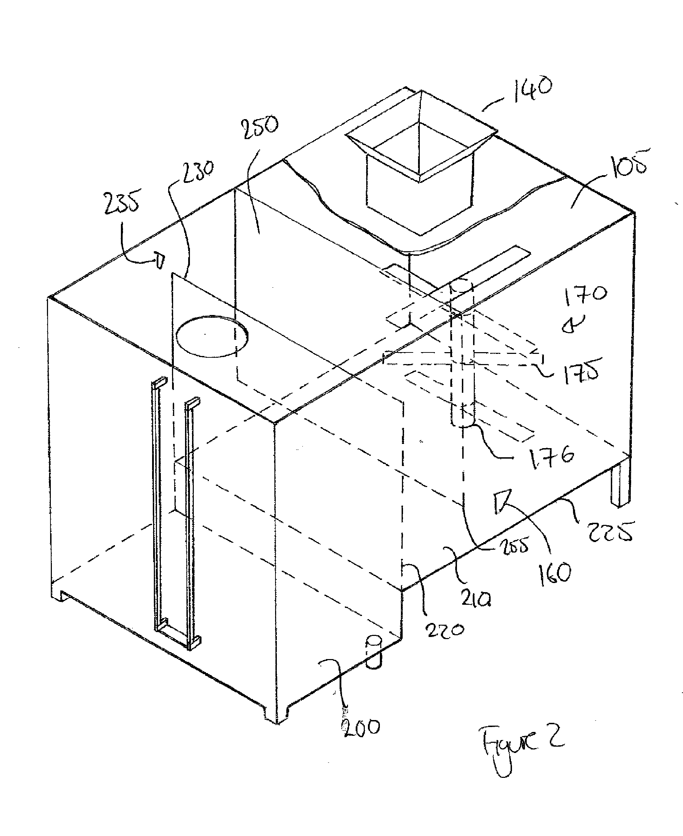

Preferred arrangements of a fish processing apparatus provided in accordance with the teaching of the invention will now be described with reference to Figures 1 and 2. It will be understood that these exemplary arrangements are provided to assist the person skilled in the art with an understanding of the benefits of an apparatus provided in accordance with the teaching of the invention and it is not intended to limit the present invention to such specifics. It will be understood that modifications can be made to the exemplary embodiments hereinafter described without departing from the scope of the invention which is only to be construed as limited insofar as is deemed necessary in the light of the appended claims.

As shown in Figure 1, the invention provides a fish processing apparatus 100 for use in-line between a fishing vessel 110 and a fish processing factory 120. The apparatus is desirably a stand-alone apparatus and is portable such that it can be moved to its desired operational location when desired and then moved to a storage location during periods of non-use. Such a storage location may be onshore, for example on a location away from the immediate quay side 125 on which the fishing vessels dock or could be on the deck of the actual fishing vessel 130. In such a latter arrangement the apparatus would travel with the fishing vessel such that irrespective of the ultimate location of the fish factory that the vessel decides to use for processing their catch, they have a pre-processing apparatus with them for installing between the vessel and the factory during the transfer of the catch from the vessel to the factory. In common with prior art arrangements fish are discharged under vacuum conditions using an outlet pipe 111 into a dewatering box 112 where the fish and water are separated. Water may be returned to the hold via a water return pipe 113 while the fish pass under gravity through fish feed pipe 114 into the apparatus 100.

The apparatus including an inlet 140 for receiving fish from the fishing vessel and an outlet 150 for discharging processed fish to the fish factory. Both the inlet and outlet are desirably located on the top or upper surface 105 of the apparatus. As shown in Figure 2, the apparatus defines an interior volume 160 within which is located a macerator 170. The macerator 170 is desirably provided adjacent the inlet 140 and provides for a maceration of the fish on receipt into the apparatus. Within the context of the present invention the terms "macerating" or "maceration" refers to a cutting or shredding of fish to form a pulp. Typically the macerator includes a plurality of blades 175 located below the inlet to the apparatus. On receipt into the apparatus through the inlet, the received fish fall onto the blades where they are cut or macerated. A plurality of blades may be provided and two or more sets could be located one above one another within the apparatus, but each of the blades being provided in a horizontal configuration. The blades may be mounted on an axle 176 and are rotatable on that axle to achieve the desired cutting. It will be appreciated that the speed of rotation of the blades will affect the cutting efficiency and this may be a user defined and controllable parameter. Power for the blades may be externally provided through for example a power connection 141. It will be further appreciated that the angle of the blades, their length and their number may all be selected to optimise the maceration process. While not shown in this exemplary embodiment, the blades could be provided within a conduit that extends vertically down from the inlet into the apparatus. The provision of such a conduit will control the delivery of the received fish onto the blades.

Once macerated, the fish may be transferred to a silo 200 for temporarily storing the macerated fish prior to their discharge from the outlet. The silo is desirably separated from the macerator by a weir 210, the weir being located between the macerator and the silo, although of course it is possible to simply direct the fish through the macerator into a holding tank. A benefit of the separation is that the degree of maceration is controlled and previously macerated fish are directed away from the cutting elements.

The weir desirably includes a first vertical separator 220 located within the interior volume and extending upwardly from the base 225 of the apparatus. An upper surface 230 of the first separator and the top of the apparatus 105 define a gap 235 through which macerated fish may be displaced into the silo on receipt of additional fish into the apparatus.

The weir 210 desirably includes a second vertical separator 250 located within the interior volume between the macerator and the first vertical separator 220 and extending downwardly from the top of the apparatus. A lower surface 255 of the second separator and the base 225 define a gap through which macerated fish may pass. It will be understood therefore that within the volume of the apparatus that the fish pass downwardly through the macerator under the second vertical separator and then over the first separator prior to their receipt within the silo. In this way the mixing of macerated fish with the macerator is minimised such that a defined level of maceration may be achieved. As the fish are desirably transferred within a volume of liquid this movement within the apparatus is effected by the receipt into the apparatus from the fishing vessel of additional fish.

As was mentioned above, the outlet 150 is located at the top of the apparatus coincident with the silo location. Each of the outlet and inlet are configured to effect a coupling with pipework 270 that enables the provision of a continuous line between the vessel, the apparatus and the factory.

Desirably additional pipework may be provided between the factory and the vessel to provided for a closed loop configuration. In this way any fish oils that are contained within the water volume that is used for transportation of the fish are circulated through closed loop such that subsequent passages of that water volume through the factory can ensure an extraction of such oils from the volume.

It will be understood that such an arrangement, as provided by usage of an apparatus as hereinbefore described enables a method of pre-processing fish including the steps of receiving fish from a fishing vessel, macerating the fish within the defined volume apparatus, and then discharging the macerated fish from the defined volume apparatus to a fish factory.

By effecting a maceration of the fish prior to their entry into the fish factory the form of the fish is in a pulp. This reduces the possibility of the fish blocking the pipework of the fish factory and is particularly advantageous in the context of processing of bony fish such as boar fish which would have a tendency to block the pipework unless shredded or macerated such as herein described. It will be appreciated that as the fish are delivered from the hold of the vessel under vacuum pressurised conditions that the chances of the fish blocking the pipework between the vessel and the apparatus is not that high. Using the teaching of the present invention the pressure used to deliver the fish from the processing apparatus to the fish factory does not have to be that high, and indeed transfer may be effected using impeller technologies, and as the fish are in a macerated condition, the chances of the fish effecting a blocking of the pipework is minimised.

It will be appreciated that what has been described herein is an exemplary arrangement of a fish processing apparatus that may be used between a fishing vessel and a fish factory. The apparatus is configured to receive fish from the fishing vessel and provides a pre-processing of the fish into a macerated form which may be then subsequently discharged into the factory. While the teaching of the invention has been described with reference to exemplary arrangements thereof, it will be understood that modifications can be made to that described herein without departing from the scope of the invention which is to be construed as limited only insofar as is deemed necessary in the light of the appended claims.

Where the words "upper", "lower", "top", bottom, "interior", "exterior" and the like have been used, it will be understood that these are used to convey the mutual arrangement of the layers relative to one another and are not to be interpreted as limiting the invention to such a configuration where for example a surface designated a top surface is not above a surface designated a lower surface.

Furthermore, the words comprises/comprising when used in this specification are to specify the presence of stated features, integers, steps or components but does not preclude the presence or addition of one or more other features, integers , steps, components or groups thereof.

## Claims

1. A fish processing apparatus for use in-line between a fishing vessel and a fish processing factory, the apparatus including an inlet for receiving fish from the fishing vessel and an outlet for discharging processed fish to the fish factory, and wherein the apparatus defines an interior volume including a macerator provided adjacent the inlet for macerating the fish on receipt into the apparatus and a silo for temporarily storing the macerated fish prior to their discharge from the outlet.

2. The apparatus of claim 1 wherein the macerator includes a plurality of blades providing, in use, for a cutting of the received fish.

3. The apparatus of claim 2 wherein the inlet is provided on the top of the apparatus and the blades are located below that inlet such that fish received into the apparatus through the inlet will fall onto the blades.

4. The apparatus of claim 3 wherein the blades are provided in a horizontal configuration.

5. The apparatus of claim 4 wherein the apparatus includes a weir located between the macerator and the silo.

6. The apparatus of claim 5 wherein the weir includes a first vertical separator located within the interior volume and extending upwardly from the base of the apparatus, an upper surface of the first separator and the top of the apparatus defining a gap through which macerated fish may be displaced into the silo on receipt of additional fish into the apparatus.

7. The apparatus of claim 6 wherein the weir includes a second vertical separator located within the interior volume between the macerator and the first vertical separator and extending downwardly from the top of the apparatus, a lower surface of the second separator and the base defining a gap through which macerated fish may pass.

8. The apparatus of any preceding claim wherein the outlet is located at the top of the apparatus coincident with the silo location.

9. The apparatus of any preceding claim configured for receiving and discharging the fish in a water volume.

10. The apparatus of claim 9 wherein the water volume is provided in a closed loop circuit between the fish factory, the fishing vessel and the apparatus.

11. The apparatus of claim 2 wherein the blades are provided in a conduit defining a passageway through which fish received into the apparatus must pass.

12. A method of pre-processing fish including,
a. Receiving fish from a fishing vessel,
b. Macerating the fish within the defined volume apparatus,
c. Discharging the macerated fish from the defined volume apparatus to a fish factory.
